Europäisches Patentamt

European Patent Office

Office européen des brevets

(11) Publication number: **0 201 261**
**A2**

# (12) EUROPEAN PATENT APPLICATION

(21) Application number: **86303215.7**

(22) Date of filing: **28.04.86**

(51) Int. Cl.⁴: **G06F 15/66**

(30) Priority: **30.04.85 US 729003**

(43) Date of publication of application:
**17.12.86 Bulletin 86/46**

(84) Designated Contracting States:
**CH DE FR GB IT LI NL**

(71) Applicant: **International Business Machines Corporation**
**Old Orchard Road**
**Armonk, N.Y. 10504(US)**

(72) Inventor: **Lumelsky, Leon**
**37 Columbus Place, Unit 12**
**Stamford Connecticut 06907(US)**

(74) Representative: **Atchley, Martin John Waldegrave**
**IBM United Kingdom Limited Intellectual Property Department Hursley Park**
**Winchester Hampshire SO21 2JN(GB)**

(54) Processor for performing logical operations on picture element data bytes.

(57) A processor for performing logical operations on pixels (picture element data bytes) includes one or more processing elements (PE1 ... PEM) responsive to pixels provided by a frame buffer (FB). Each processing element stores pixels from the frame buffer in source (SR) and destination (DR) registers. The ALU portion of each processing element (PE) includes a digital memory (PERAM) addressed by the registers to produce a result pixel value which can be written back to the frame buffer. The memory (PERAM) can implement a wide variety of processing operations by loading the memory with data specific to all the different operations.

FIG. 1

## PROCESSOR FOR PERFORMING LOGICAL OPERATIONS ON PICTURE ELEMENT DATA BYTES

The present invention relates to processors for performing logical operations on pixels (picture element data bytes) representing graphics images, in particular pixels relating to picture elements of different colours.

Digital data has been used to represent images formed from picture elements .Computers, which process digital data, have also been used to process the digital data representing images so as to effect graphical processing. Typically, computers process data sequentially and thus, originally, graphical processing was effected using the sequential processing. It was readily recognized, however, that the typically large amount of graphical data that had to be processed led to unusually long processing times using the computer in a wholly sequential mode. As a result, special purpose apparatus, sometimes called image or graphics processors, was developed which used some type of parallelism to effect graphical processing more quickly than a typical computer would have performed that processing using its sequential mode of operation. When graphics are represented by black and white picture elements, the necessary processing could be achieved by logical combinations of the information representing the black picture elements and the information representing the white picture elements. For example, copying a source image (S) on to a destination (D) image with a specified logical operation could be achieved by OR'ing the S image picture elements with the D image picture elements to produce a new set of picture elements for the D image. The data representing each picture element will be handled in picture element data bytes (pixels).

More recently graphics representations have added the new dimension of colour. Colour introduces an added complexity to graphical processing. In a colour system, a copy operation may require that a pixel (picture element data byte) be copied under certain conditions or that a new pixel value be produced during the copy operation. More particularly, in a typical operation in which two images may be merged or overlaid, if the two images carry different colours, information other than that relating to the mere colours may be necessary in order to produce the result. For example if the images represent opaque areas, the result depends on which of the two original images is on "top", i.e. which one is hidden. Alternatively, if the images represent semi-transparent regions, the result of overlaying one image on the other may be a colour which is some blending of the colours of the two original images. In either event, processing may require some information beyond that relating to the mere colour of the two original images.

The object of the present invention is to provide an improved processor for performing logical operations on pixels (picture element data bytes), representing graphic images, in particular pixels relating to picture elements in different colours.

According to the invention a processor for performing logical operations on pixels (picture element data bytes) representing graphics images comprises a frame buffer for storing multi-bit pixels with an input and an output, at least one processing element including multi-bit source and destination registers and a digital memory addressable by the source and destination registers, a first data path from the frame buffer output to the source and destination registers and a second data path from the digital memory to the frame buffer input, whereby pixel data output from the frame buffer can be used to address the digital memory and data extracted from said digital memory can be written back in to the frame buffer.

In order to maintain the parallelism speed advantage, the processor is arranged to work on many pixels simultaneously with single instruction multiple data (SIMD) parallel operations. The tables themselves are RAMs whose sizes must be limited because they are replicated many times.

In addition to the colour attribute of a pixel, Z buffer systems employ a pixel which is associated with Z values to solve hidden surface problems. The pixel thus represents, in addition to the colour, other attributes such as one indicating which image is "on top". By treating attributes as independent, the processor uses the data to modify the frame buffer so that all attributes including the colour can be modified during processing.

According to one embodiment of the invention, the digital memory of the processor comprises a different digital memory section for each of the fields of the source and destination registers. Thus, one section of the digital memory can be addressed, not only by a specific field of the source and destination registers, but in addition by an output of a different section of the digital memory. Several small RAMs are effectively doing the task of one large RAM, reducing memory needs considerably.

In order that the invention may be more readily understood an embodiment will now be described with reference to the accompanying drawings, in which:

Fig. 1 is a block diagram of one embodiment of the invention;

Fig. 2 is a detail of a single frame buffer plane (FBP);

Fig. 3 is a detailed block diagram of a typical processing element PE as illustrated in the processor in Fig. 1;

Figs. 4A, 4B and 4 (positioned as indicated in Fig. 4) together form a detailed interconnection diagram of a Frame Buffer used in the embodiment of Fig. 1 and providing for 4-bit pixels and operating on four pixels simultaneously and thus including FBP1-4 and PE1-4;

Figs. 5A and 5B together form a table illustrating the contents of the micro-coded memory U so as to effect functions which are described hereinafter;

Figs. 6-8 illustrate several different graphics processing functions which can be implemented by embodiments of the invention; and

Fig. 9 is a block diagram of one form of a modified processing element MPE.

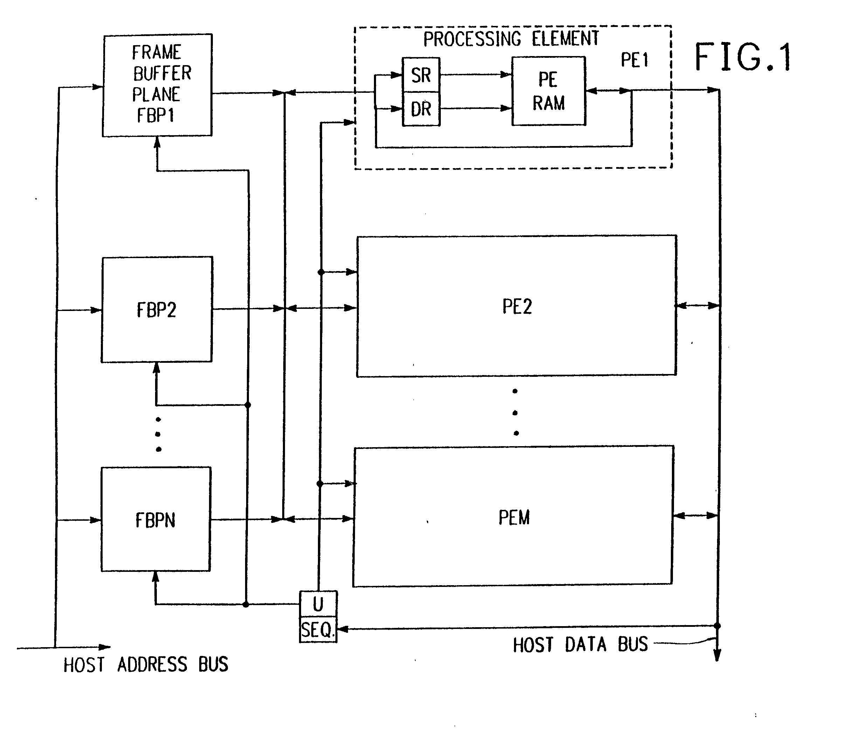

Fig. 1 shows a block diagram of a processing system in accordance with the invention. The system includes a Frame Buffer which consists of N planes FBP1-FBPN. One bit from each plane makes up a pixel (picture element data byte). The system also includes M processing elements PE1-PEM which can process M pixels simultaneously. A typical processing element, as illustrated, includes a source register SR and destination register DR to receive a pixel (a bit from each different plane FBP1-FBPN) which is used to address a memory PERAM which performs colour bit (or processing) operations. The output of the PERAM is returned to the Frame Buffer (again, a bit to each different plane) and is also available to a Host Data Bus. This configuration allows for M pixels to be processed in parallel where each pixel has N bits -one bit from each Frame Buffer plane. The Frame Buffer plane, in turn, may be addressed from a Host Address Bus. The Host Data Bus controls the processing by controlling the FBP1-N and PE1-M as shown.

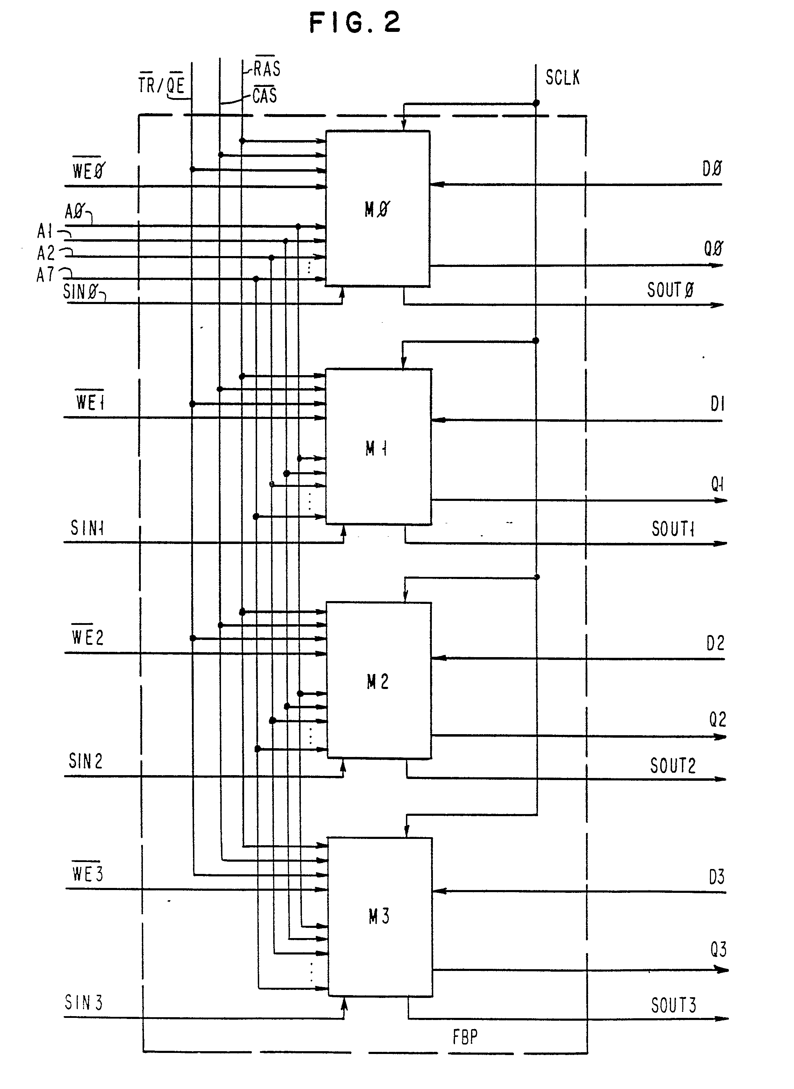

Fig. 2 is a detail of one Frame Buffer plane. This embodiment shows four RAMS (M0/-M3) which may be of type Texas Instruments TMS 4161. This is a two-port RAM system. The sequential or refresh port of each RAM is governed by three signals SLK, SINn, and SOUTn. These controls produce video refresh. The sequential or refresh port will not be described further.

For the update parallel port, the following signals are common the addresses A0 through A7, $\overline{RAS}$ , $\overline{CAS}$ and $\overline{TR}$ / $\overline{QE}$ . The signals which are separate are $\overline{WE}$ 0- $\overline{WE}$ 3 (write enable), D 0-D3 (data in), Q0-Q3 (data out). Each Frame Buffer plane allows the access of one bit each for four pixels accessed in parallel. Four RAMs would allow for a CRT resolution of 512 by 512. Video RAMs M0-M3 are assumed to be 64K by 1 for each video RAM.

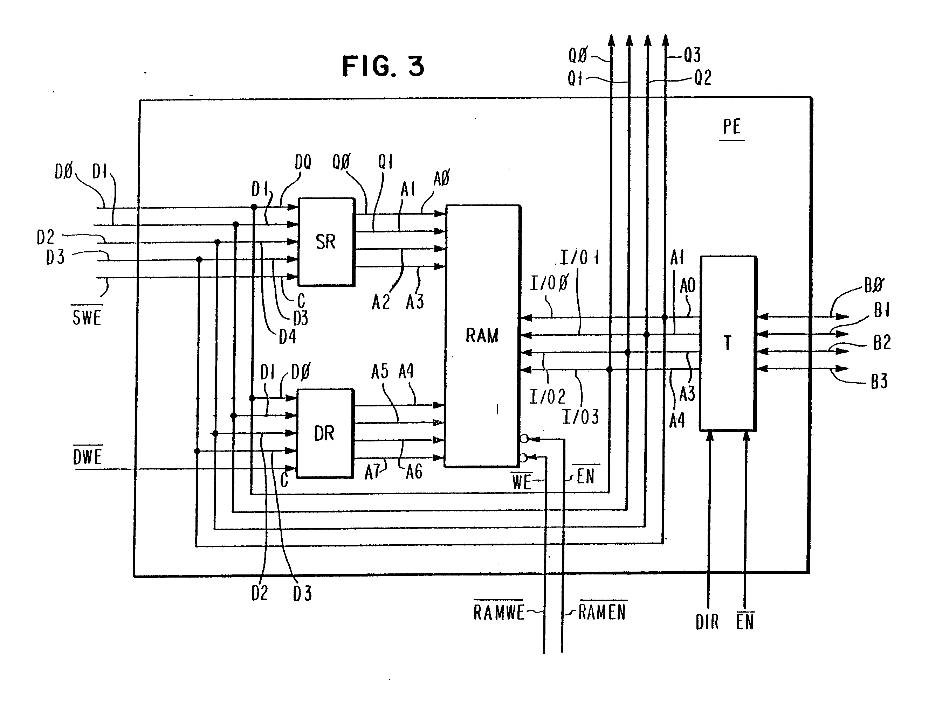

Fig. 3 shows the details of a typical processing element PE. A source register (SR) and destination register (DR) are shown which provide addresses to a RAM and the output of the RAM is available to a transceiver T which interfaces with the host. The inputs to the processing element are D0-D3, which are common in both source register (SR) and destination register (DR). Outputs to the Frame Buffer are Q0-Q3 and outputs to the host data bus are B0-B3. The RAM is controlled by $\overline{RAM\,WE}$ (RAM write enable) and $\overline{RAM\,EN}$ (RAM enable). The direction of the transceiver is controlled by DIR and the transceiver is enabled by $\overline{EN}$ . Note that D0-D3 are connected to Q0-Q3. Signals $\overline{SWE}$ and $\overline{DWE}$ are used to enable the loading of the source and destination registers.

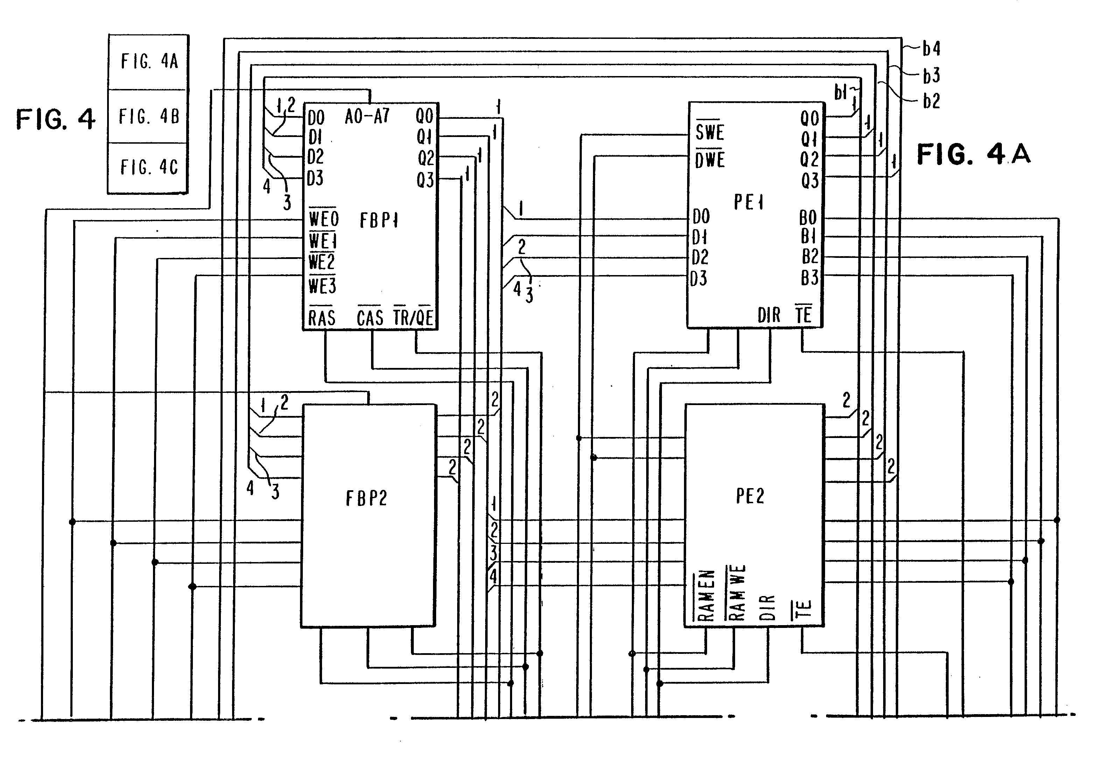

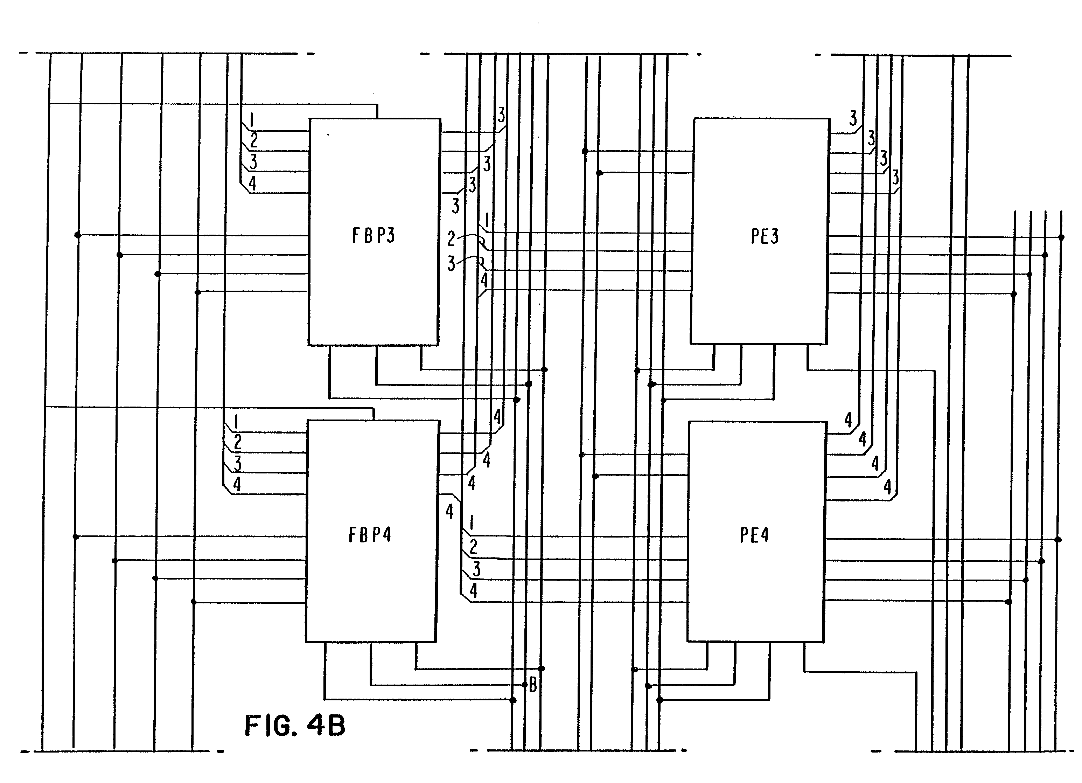

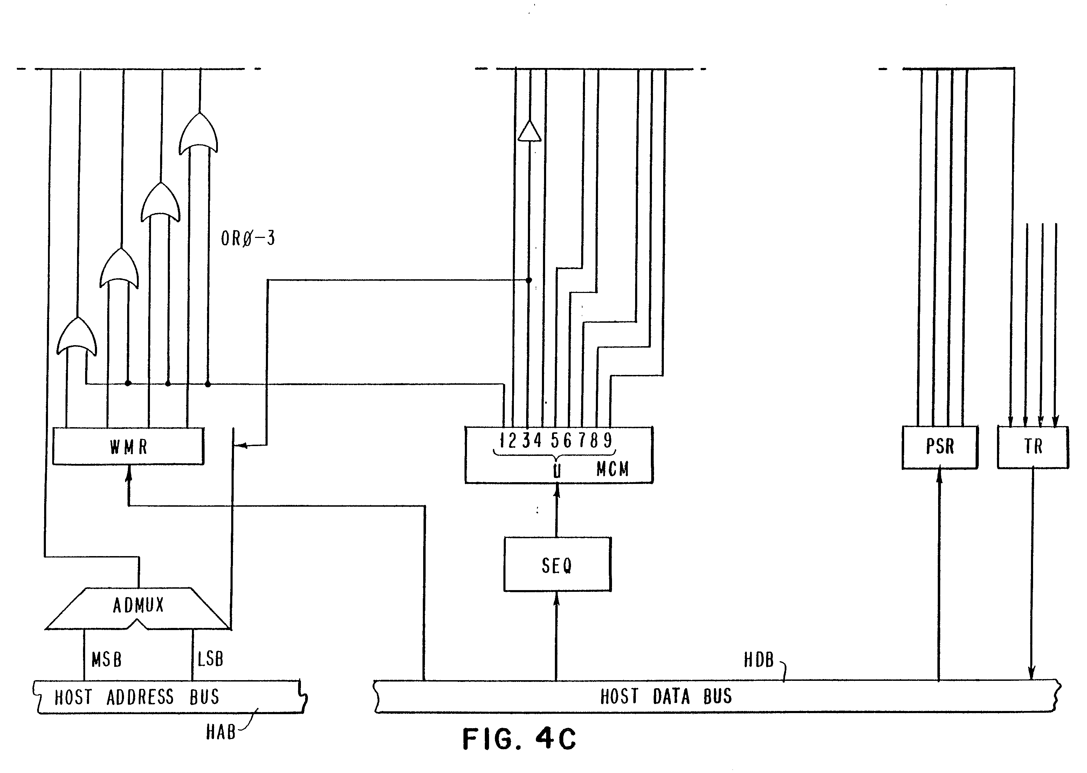

Figs. 4A, 4B and 4C together show the details of the Frame Buffer including connections between the Frame Buffer planes FBP and processing elements PE (four Frame Buffer planes FBP1-4 and four processing elements PE1-4 are shown in this implementation). There are four buses connecting the processing elements to the Frame Buffer planes, referred to as buses b1, b2, b3 and b4. The lines of the buses, which are also numbered 1, 2, 3 and 4 show the order of the interconnections between the Frame Buffer planes and the processing elements. All lines going into and out of the Frame Buffer are numbered so that the interconnections are clear. This configuration allows for four pixels to be processed in parallel where each pixel has four bits (N and M are both equal to four). The Host Address Bus (HAB) provides the addressing to the Frame Buffer. The most/least significant bytes of the 16-bit Host Address Bus (HAB) are multiplexed to the 8-bit address inputs of the Frame Buffer planes through ADMUX.

A write mask register (WMR) allows for the following each bit of the write mask register allows a bit to be written into each of the four Frame Buffer planes and this causes one pixel to be written into the Frame Buffer. The outputs of the processing element s PE1 to PE4 (data lines B0-B3) are connected to the transceiver TR and to themselves. A register PSR (processor element select register) controls which processing element is connected to the host data bus HDB. The write mask register WMR and the processing element register PSR are both loaded from the host data bus HDB.

A sequencer SEQ provides a sequence of control signals to the system. The sequencer SEQ provides addressing to the micro-control memory U. The nine outputs of the micro-control memory - (U1-U9) are control signals for the Frame Buffer FBP1-4 and for PE1-4.

The host data bus HDB provides operation codes to the sequencer SEQ which will be discussed later. It should be clear that, while Figs. 4A, 4B and 4C show N = M = 4, in general N and M are completely independent.

The output of WMR enables particular pixels in all planes of the Frame Buffer, depending on the value of the control bit 1 of micro-control memory U. The control bit 1 gates the output of WMR through OR gates OR0-3. Control bits U2, U3 and U4 provide common $\overline{RAS}$, $\overline{CAS}$ and $\overline{TR}$ / $\overline{QE}$ with a delay at Buffer B. Control bit U3 is also used to control the address multiplexer (ADMUX). Control bits U5 and U6 are $\overline{SWE}$ and $\overline{DWE}$ for each processing element PE. Control bits U7, U8 and U9 are $\overline{RAMEN}$, $\overline{RAMWE}$ and the directional signal (DIR) for the processing element PE.

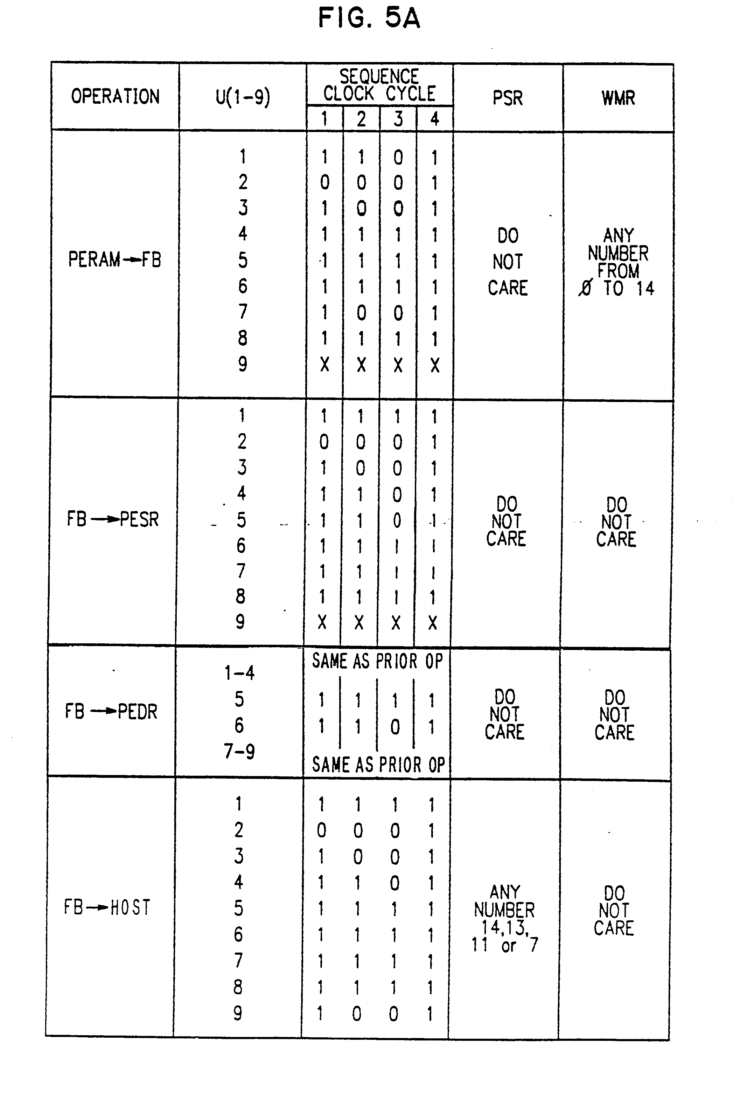

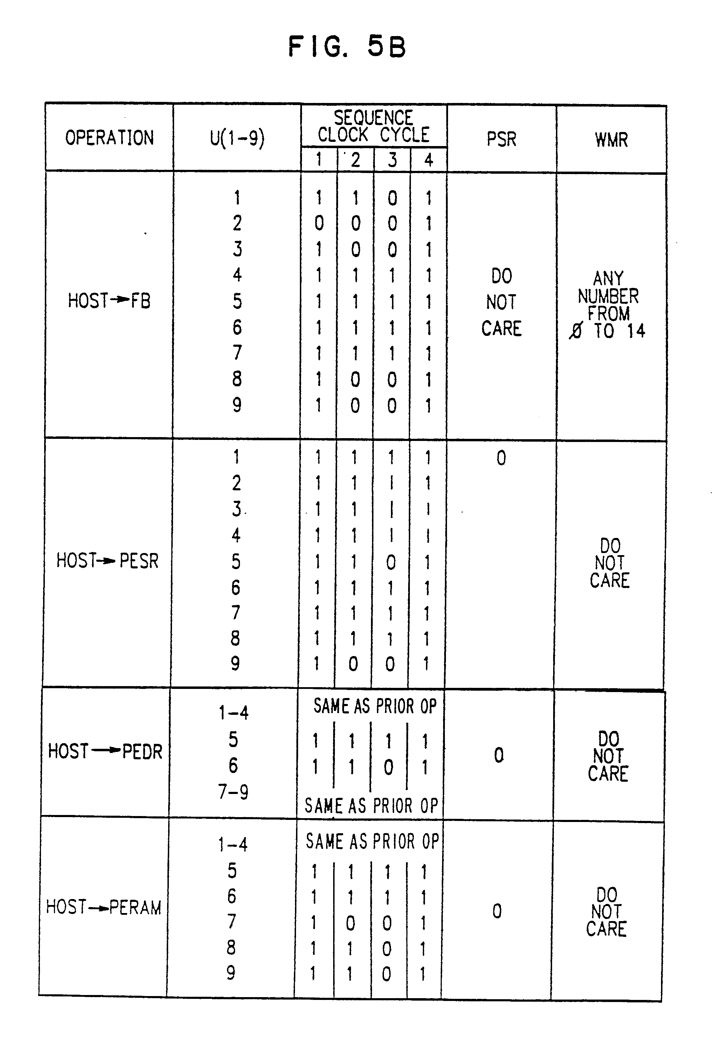

Figs. 5A and 5B show exemplary opcodes and the control signals generated by the sequencer SEQ and micro-code memory U. The opcodes show the transfer of data between the host, the Frame Buffer, the processing elements, the source and destination registers and the processing element RAMs. The columns in Figs. 5A-5B show in sequential order the operation codes, the nine control bits, for each of the four sequencer cycles, and the data provided during each cycle. The last columns are the PSR and WSR register data values legal or valid during each cycle.

Column 1 shows the operation name. There are eight basic data transfer operations. They are PE RAM to Frame Buffer (FB), Frame Buffer (FB) to PE Source Register (PESR), Frame Buffer (FB) to PE Destination Register (PEDR), Frame Buffer - (FB) to Host, Host to Frame Buffer (FB), Host to PE Source Register (PESR), Host to PE Destination Register (PEDR), and Host to PE RAM.

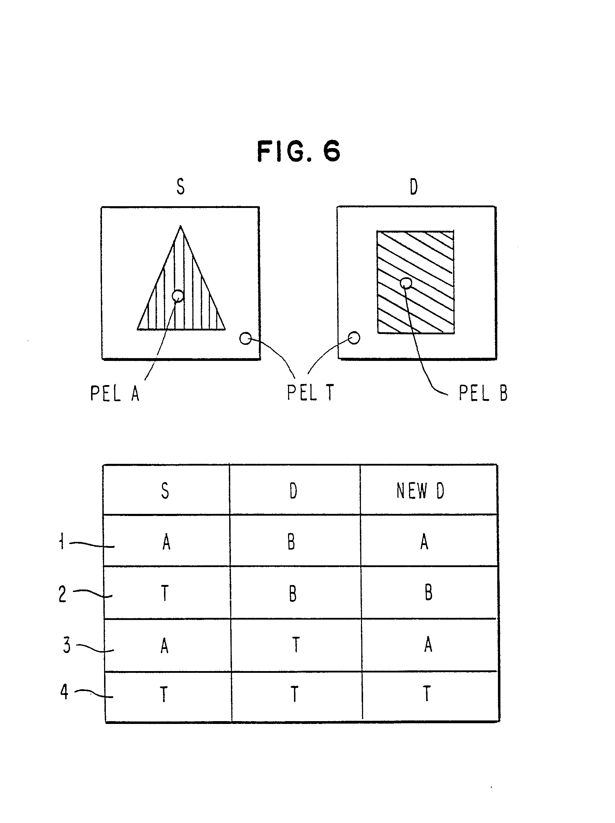

Fig. 6 shows an example of a copy function to combine or merge a source image S with a destination image D, to produce a new destination image. The source image includes two types of pel (picture element), as shown in Fig. 6, A-pels are of a first colour, whereas T-pels are transparent. The destination image includes similar T-pels, as well as B-pels which are of a colour different from that of the A-pels in the source image. We assume that the graphics programmer desires to produce a new destination image with the A-pels overriding the B-pels. The table in Fig. 6 has three columns, the S column identifies the two types of pels in the source image and the D column identifies the two types of pels in the destination image. The third column shows the result. There are four different cases indicated on each of the different rows 1-4. Row 1 indicates that where A and B pels are superimposed, the A pel is to be the result. Row 2 indicates that where a transparent pel T in the source image is superimposed on a B pel from the destination image, then the result is a B pel. Row 3 indicates that where an A pel from the source image is superimposed on a T pel in the destination image, the result is to be an A pel. Finally, row 4 indicates that where T pels are superimposed the resulting image is to be a T pel.

From the preceding description it should be apparent that by loading the PERAM to reflect the table shown in Fig. 6, the apparatus shown in Figs. 1-4 will produce the desired result. More particularly, when the source register SR is loaded with data (pixel) representing an A pel, and the destination register DR is loaded with a value corresponding to a B pel, the output of the PERAM will be the data corresponding to an A pel. Similar results for each of the different rows in Fig. 6 should be apparent. It will be understood that the data byte representing a pel (picture element) is termed a pixel (picture element data byte) in the description.

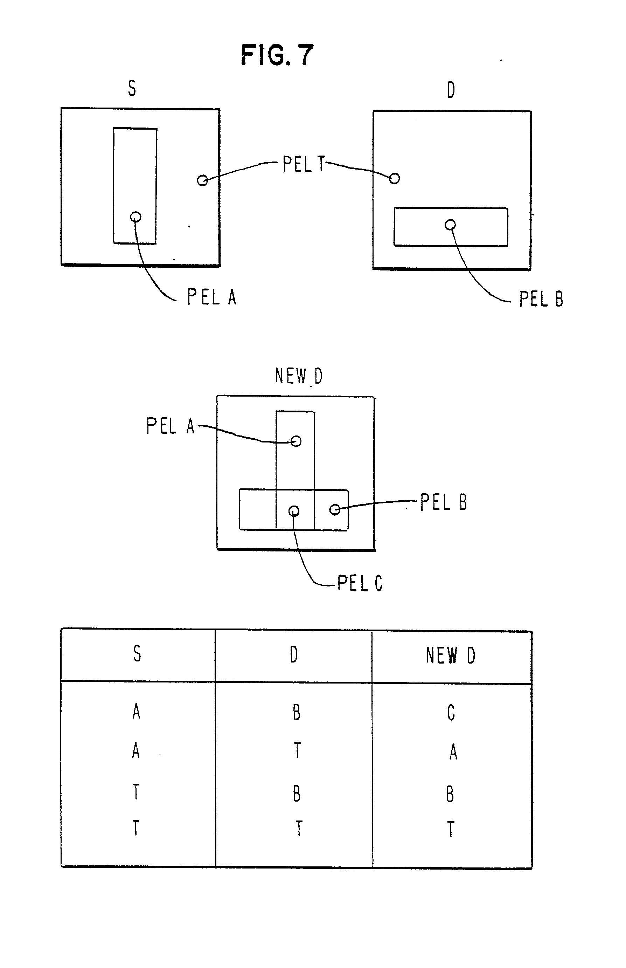

Fig. 7 shows a different operation. In Fig. 7, the source and destination images are shown at S and D, respectively. The result (new D) indicates that, in regions of the image which have an A pel and a B pel superimposed, the result is to be a C pel (for example a new colour ). The table of Fig. 7 shows how this result is created by properly loading the PERAMs. More particularly, the first row of the table in Fig. 7 shows that when A and B pels are superimposed in a region in the source and destination images, the PERAM produces an output corresponding to a new C pel providing, for example, the effect of translucency.

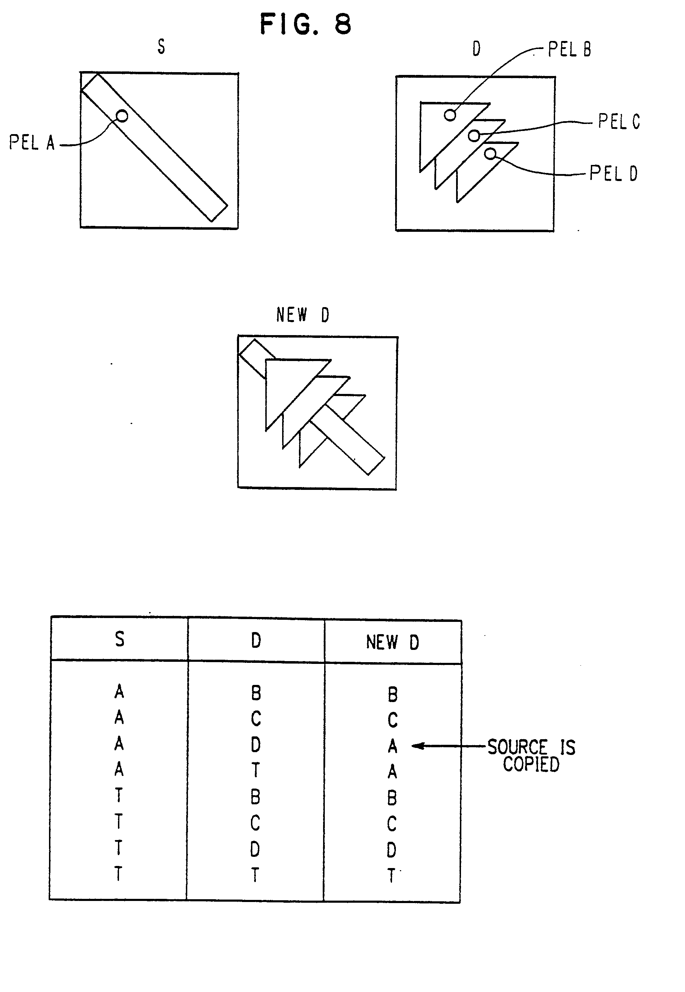

Fig. 8 shows finally a still different operation. This figure illustrates 2.5 D images with colour priority. The colour represents the Z coordinate of the object. In Fig. 8 the source and destination images S and D are illustrated. The source region includes a single rectangular area of A pels. The destination image includes, over a background (not specifically identified), three different types of pel, B, C and D (for example these may be of different colours) with a portion of the region formed from B pels being hidden by other regions, and a portion of the region formed from pels also being hidden. The desired result is shown in the new D. More particularly, the A pels are to be hidden by regions of B and C pels, but, on the other hand, the region of D pels is to be hidden by the region of A pels. The table in Fig. 8 shows, on different rows, the eight different cases. The first row indicates that where A and B pels are superimposed, the result is to be a B pel (e.g. the B pels hide or overlie the A pels). Row 2 indicates that the same condition is true for A and C pels. On the other hand, row 3 shows that the A pels overlie or hide the D pels. Finally, rows 4-8 indicate respectively that the A pels overlie the background in the destination image, and that the D, and B pels of the destination image overlie the background or T pels of the source image, and that, where background or T pels are similarly located in both source and destination images, the result is a T pel. It should be apparent to those skilled in the art that by loading PERAM with data such as shown in the table of Fig. 8, the desired result will be produced by the apparatus of Figs. 1-4.

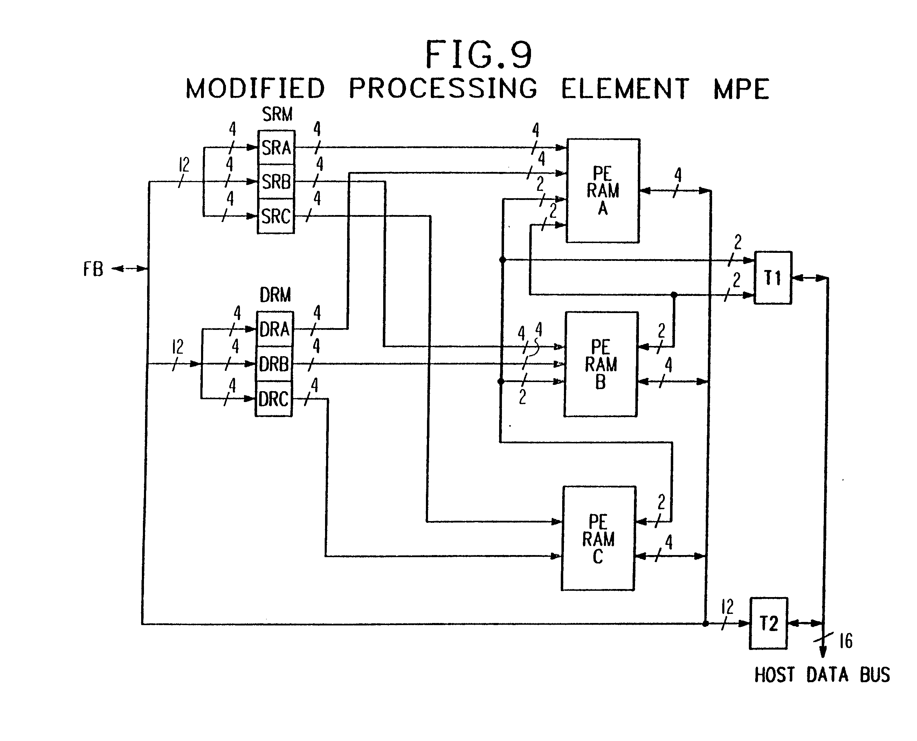

Fig. 9 shows a different processing element MPE which can process pixels and independent attributes. In Fig. 9, SR and DR have been replaced by SRM and DRM, each with three fields, SRA-SRC and DRA-DRC. The PERAM is replaced with PERAMA, PERAMB and PERAMC. This processing element is for a system of 12-bit words accessed from the Frame Buffer, four bits of basic pixel data and eight bits of independent attribute data. The Frame Buffer of Fig. 4 is extended to a 12-bit system instead of a 4-bit system (the number of bits per word is arbitrary). There are twelve Frame Buffer planes FBP1-12 and an arbitrary number of processing elements, for example four. We have arbitrarily assumed the pixels to be four bits of basic pixel data and the attributes to be eight bits long. This system allows for a 4-bit pixel (representing colour and/or intensity) and two 4-bit independent attributes. Transceiver T2 which is a 12-bit transceiver is used to communicate with the Frame Buffer (FB) and source/destination registers (DRM, SRM). T2 also allows communications of twelve bits with RAMs A, B, C-four bits from each. Two bits of the output of RAMs of B and C are communicated through T1 to the host data bus forming four bits. A total of 16 bits to the host data bus are communicated via T1 and T2. Thus T1 serves for the loading of RAMs while T2 both communicates with the Frame Buffer and the source/destination register and the loads of the RAMs.

In connection with Fig. 9, which illustrates a modified form of the processing element PE, it is assumed that the A, B and C fields of a pixel respectively relate to a colour attribute, to a transparency attribute and to a Z value. As shown in Fig. 9 the source and destination registers SRM and DRM both include fields SRA-SRC and DRA-DRC respectively. As is the case in other embodiments of the invention the source and destination registers are loaded from the frame buffer and are used to address the table in the processing element. The modified processing element MPE of Fig. 9 shows that the different fields of SRM and DRM address respectively PERAMA-PERAMC, respectively. The tables stored in PERAMA-PERAMC can be loaded from the host data bus, and can be loaded as frequently as between different sequential operations so as to perform a suitable function by table look-up. The PERAMC can compare the Z attributes of the source and destination pixels to determine which pel is "hidden" by the other. The result of this operation (which is really a comparison) is passed and can be used to assist in addressing PERAMB. Likewise, the output of PERAMB can be used to address PERAMA. The result, e.g. the output of PERAMA can be expressed as a value:

$$RES = OUTA(FS1, FD1, OUTB(FS2, 1D2, OUTC(FS3, FD3), OUTC (FS3, FD3))$$

where:

RES is the result for a colour value to be written into the frame buffer FB,

OUTX is the output of RAM X,

FSn is a field n (an attribute field) from the source register,

FDn is a field n (an attribute field) from the destination register.

Referring for example to Fig. 9, copy operations can be made with pels having properties of opaque, transparent and translucent. The Z values determine which pel is on "top", by the contents in PERAMC. The output of PERAMC plus the transparencies attributes (the B field) determines one of three results, the colour value of the source register can be copied, the colour value of the destination register can be copied, or the colour value of neither register is copied and a new translucent colour value is copied. The result of the transparency field B is used to address the PERAMA, to determine the result.

In a second and more limited example, the A field could be the colour field, where the B and C fields are respectively low order and high order Z values. In this event the output of PERAMC may indicate either that the source or the destination image is on "top", or there is an equality. In the latter case, the output of PERAMB determines whether the source or the destination image is on "top" to resolve the equality result from PERAMC.

In a still more simple example, the field is eliminated, so that the MPE has tables PERAMA and PERAMB, and both SRM and DRM include fields SRA and SRB, DRA and DRB. In this example the A table and fields represent colour and the B table and fields represent Z value. Thus the pel data includes both colour and Z value. PERAMB has data useful to compare Z values and produce a 2-bit result for PERAMA. PERAMA does a copy operation using the Z data to produce the correct value to be returned to the frame buffer.

## Claims

1. A processor for performing logical operations on pixels (picture element data bytes) representing graphics images comprising:

a frame buffer (FB) for storing multi-bit pixels with an input and an output,

at least one processing element (PE1....PEM) including multi-bit source (SR) and destination (DR) registers and a digital memory (PERAM) addressable by said source and destination registers,

a first data path from said frame buffer output to said source and destination registers and a second data path from said digital memory to said frame buffer input,

whereby pixel data output from said frame buffer can be used to address said digital memory and data extracted from said digital memory can be written back in to said frame buffer.

2. A processor as claimed in claim 1 in which said source (SR) and destination (DR) registers include multiple fields, and

said digital memory (PERAM) includes a plurality of digital memory sections (PERAMA ..... PERAMC), each digital memory section being addressed by a different field of said source and destination registers.

3. A processor as claimed in claim 2 which includes a further data path from at least one output from a section of said digital memory to an addressing input of another section of said digital memory.

4. A processor as claimed in any of the preceding claims which further includes a data bus coupled to a data input of said digital memory for writing predetermined data therein.

5. A processor as claimed in claim 4 which includes a plurality of said processing elements (PE1 ... PEM) and which further includes a host computer wherein said data bus is a data bus of said host computer and which further includes an address bus,

an address multiplexer coupled between said host address bus and addressing inputs of said frame buffer, and

a microcoded memory driven by said host data bus with an output coupled to control inputs of said processing elements.

6. A processor as claimed in claim 5 in which each of said processing elements includes a transceiver (T) coupled between said host data bus and an input/output of said digital memory (RAM) whereby data on said host data bus can be input to said digital memory or data from said digital memory can be written onto said data bus in response to different of said control inputs derived from said microcoded memory.

7. A processor as claimed in any of the preceding claims in which said frame buffer (FB) has a number of different planes (FB1 ... FBN) equal to the number of bits in said multi-bit pixel, and which further includes M different processing elements (PE1 ... PEM) to provide for simultaneous processing of M different multi-bit pixels where M is an integer greater than 1.

8. A method of colour graphic processing for performing logical operations on graphics representing digital data comprising:

extracting pixels (picture element data bytes) representing two regions of an image to be merged from two different locations of a frame buffer,

addressing a data table with said pixels to produce a result pixel, and

writing said result pixel back to said frame buffer.

9. A method as claimed in claim 8 wherein said result pixel is written to a location in said frame buffer identical to a location from which one of said extracted pixels were extracted.

10. A method as claimed in claim 9 in which said result pixel is identical to one of said extracted pixels.

11. A method as claimed in claim 9 in which said result pixel is different from either of said extracted pixels.

12. A method as claimed in claim 9 which includes the further step of transferring data from a host computer to write said data table.

13. A method as claimed in any one of claims 8, 9, 10, 11 and 12 which includes providing a plurality of data tables, and in which each of said pixels includes a plurality of fields, and said addressing step includes addressing different ones of said data tables by different ones of said pixel fields.

14. A method as claimed in claim 13 in which said addressing step includes addressing at least one of said tables with an output of a different one of said tables.

FIG.1

0 201 261

# FIG. 2

FIG. 3

0 201 261

FIG. 4

| FIG. 4A |
| FIG. 4B |
| FIG. 4C |

FIG. 4.A

0 201 261

FIG. 4B

0 201 261

ORØ-3

WMR

ADMUX

MSB    LSB

HOST ADDRESS BUS

HAB

1234 56789

U    MCM

SEQ

HDB

HOST DATA BUS

PSR    TR

0 201 261

FIG. 4C

0 201 261

# FIG. 5A

| OPERATION | U(1-9) | SEQUENCE CLOCK CYCLE | | | | PSR | WMR |
|---|---|---|---|---|---|---|---|
| | | 1 | 2 | 3 | 4 | | |
| PERAM→FB | 1 | 1 | 1 | 0 | 1 | DO NOT CARE | ANY NUMBER FROM Ø TO 14 |
| | 2 | 0 | 0 | 0 | 1 | | |
| | 3 | 1 | 0 | 0 | 1 | | |
| | 4 | 1 | 1 | 1 | 1 | | |
| | 5 | 1 | 1 | 1 | 1 | | |
| | 6 | 1 | 1 | 1 | 1 | | |
| | 7 | 1 | 0 | 0 | 1 | | |
| | 8 | 1 | 1 | 1 | 1 | | |
| | 9 | X | X | X | X | | |
| FB→PESR | 1 | 1 | 1 | 1 | 1 | DO NOT CARE | DO NOT CARE |
| | 2 | 0 | 0 | 0 | 1 | | |
| | 3 | 1 | 0 | 0 | 1 | | |
| | 4 | 1 | 1 | 0 | 1 | | |
| | 5 | 1 | 1 | 0 | 1 | | |
| | 6 | 1 | 1 | 1 | 1 | | |
| | 7 | 1 | 1 | 1 | 1 | | |
| | 8 | 1 | 1 | 1 | 1 | | |
| | 9 | X | X | X | X | | |
| FB→PEDR | 1-4 | SAME AS PRIOR OP | | | | DO NOT CARE | DO NOT CARE |
| | 5 | 1 | 1 | 1 | 1 | | |
| | 6 | 1 | 1 | 0 | 1 | | |
| | 7-9 | SAME AS PRIOR OP | | | | | |
| FB→HOST | 1 | 1 | 1 | 1 | 1 | ANY NUMBER 14,13, 11 or 7 | DO NOT CARE |
| | 2 | 0 | 0 | 0 | 1 | | |
| | 3 | 1 | 0 | 0 | 1 | | |
| | 4 | 1 | 1 | 0 | 1 | | |
| | 5 | 1 | 1 | 1 | 1 | | |
| | 6 | 1 | 1 | 1 | 1 | | |
| | 7 | 1 | 1 | 1 | 1 | | |
| | 8 | 1 | 1 | 1 | 1 | | |
| | 9 | 1 | 0 | 0 | 1 | | |

# FIG. 5B

| OPERATION | U(1-9) | SEQUENCE CLOCK CYCLE | | | | PSR | WMR |
|---|---|---|---|---|---|---|---|
| | | 1 | 2 | 3 | 4 | | |
| HOST→FB | 1 | 1 | 1 | 0 | 1 | DO NOT CARE | ANY NUMBER FROM Ø TO 14 |
| | 2 | 0 | 0 | 0 | 1 | | |
| | 3 | 1 | 0 | 0 | 1 | | |
| | 4 | 1 | 1 | 1 | 1 | | |
| | 5 | 1 | 1 | 1 | 1 | | |
| | 6 | 1 | 1 | 1 | 1 | | |
| | 7 | 1 | 1 | 1 | 1 | | |
| | 8 | 1 | 0 | 0 | 1 | | |
| | 9 | 1 | 0 | 0 | 1 | | |
| HOST→PESR | 1 | 1 | 1 | 1 | 1 | 0 | DO NOT CARE |
| | 2 | 1 | 1 | 1 | 1 | | |
| | 3 | 1 | 1 | 1 | 1 | | |
| | 4 | 1 | 1 | 1 | 1 | | |
| | 5 | 1 | 1 | 0 | 1 | | |
| | 6 | 1 | 1 | 1 | 1 | | |
| | 7 | 1 | 1 | 1 | 1 | | |
| | 8 | 1 | 1 | 1 | 1 | | |
| | 9 | 1 | 0 | 0 | 1 | | |
| HOST→PEDR | 1-4 | SAME AS PRIOR OP | | | | 0 | DO NOT CARE |
| | 5 | 1 | 1 | 1 | 1 | | |
| | 6 | 1 | 1 | 0 | 1 | | |
| | 7-9 | SAME AS PRIOR OP | | | | | |
| HOST→PERAM | 1-4 | SAME AS PRIOR OP | | | | 0 | DO NOT CARE |
| | 5 | 1 | 1 | 1 | 1 | | |
| | 6 | 1 | 1 | 1 | 1 | | |
| | 7 | 1 | 0 | 0 | 1 | | |
| | 8 | 1 | 1 | 0 | 1 | | |
| | 9 | 1 | 1 | 0 | 1 | | |

# FIG. 6

S            D

PEL A        PEL T        PEL B

|   | S | D | NEW D |
|---|---|---|-------|
| 1 | A | B | A |
| 2 | T | B | B |
| 3 | A | T | A |
| 4 | T | T | T |

## FIG. 7

S

D

PEL T

PEL A

PEL B

NEW D

PEL A

PEL B

PEL C

| S | D | NEW D |
|---|---|-------|
| A | B | C |
| A | T | A |
| T | B | B |
| T | T | T |

# FIG. 8

S

PEL A

D

PEL B

PEL C

PEL D

NEW D

| S | D | NEW D |
|---|---|---|
| A | B | B |
| A | C | C |
| A | D | A ← SOURCE IS COPIED |
| A | T | A |
| T | B | B |
| T | C | C |
| T | D | D |
| T | T | T |

# FIG.9
## MODIFIED PROCESSING ELEMENT MPE

0 201 261